# EUROPEAN PATENT APPLICATION

(11) **EP 4 394 297 A1**
(43) Date of publication of application: **03.07.2024**
(21) Application number: 22217325.4
(22) Date of filing: 30.12.2022
(51) Int. Cl.: F27B 1/00, C04B 2/08, C04B 2/10, C04B 2/12, F27B 1/02, F27B 1/04, F27B 1/08, F27B 1/22, F27D 17/00

(54) **METHOD FOR CALCINING CARBONATED MINERAL STONES IN A PARALLEL FLOW REGENERATIVE KILN AND IMPLEMENTED KILN**

(71) Applicant: S.A. LHOIST RECHERCHE ET DEVELOPPEMENT, 1342 Ottignies-Louvain-la-Neuve (BE)
(72) Inventor: VAN CANTFORT, Olivier, 1150 Woluwe-Saint-Pierre (BE); CLOAREC, Tristan, 64490 Urdos (FR)
(74) Representative: Calysta NV

(57) **Abstract**

Parallel flow regenerative kiln, comprising at least two shafts (1,2) interconnected by a crossover channel (4) wherein each shaft comprises means for injecting a heated gas (6) inside the shaft (1) in calcination working at the top of the calcination zone (B) and means for removing (21, 23) from the kiln the cooling air which has been heated in contact with the calcined material, at a level lower than the crossover channel (4), the kiln further comprising an external recirculation circuit (17) which comprises a separation body (16) for taking off a fraction of gaseous effluent from a removal duct (13), a heating device (19) able to heat a gas which is connected with said separation body (16) and arranged for heating said fraction of gaseous effluent, and said means for injecting a heated gas (6) inside the shaft (1) in calcination working, which are connected to the heating device (19) and inject said heated fraction of gaseous effluent at a temperature equal or higher than the temperature of calcination of the loaded mineral stones and method implemented in such a kiln.

## Description

The present invention relates to a method for calcining carbonated mineral stones in a parallel flow regenerative kiln (PFRK). Such a kiln comprises at least two shafts interconnected by means of a crossover channel. In each shaft the stones are introduced in a top portion and follow a downward gravity displacement during which the stones are successively preheated, calcined and thereafter cooled in order to be collected in a low portion of each shaft.

A Parallel Flow Regenerative Kiln has usually 2 to 3 shafts, circular or rectangular, which do not work in a continuous way. In standard operation, in every period, usually of 12 to 20 minutes, a fuel is injected inside a calcining zone of one shaft by means of lances and is burned in presence of combustion air. Thereafter the descending calcined product is cooled in a cooling zone by heat exchange with a cooling air introduced at the bottom of the shaft. The flue gas consists in the combustion gas, the gas of decarbonation and the heated cooling air. This flue gas is drawn into another shaft through the crossover channel and thereafter through the stones present in this shaft and thereafter outward the kiln. So, in this "preheating" shaft the present stones are preheated by the exiting flue gas. Consequently, during this period the shaft wherein the combustion takes place works according to a calcining way and the shaft wherein the flue gas is drawn through the stones works according to a preheating way. Thereafter, there is a period, usually between 30 seconds and 2 minutes, called inversion period, which is provided for reverting the air and fuel circuits. And the shaft having worked in a calcining way works now in a preheating way and the shaft having worked in a preheating way works now in a calcining way.

The classical method for calcining carbonated mineral stones in a parallel flow regenerative kiln having at least two shafts interconnected by a crossover channel, comprises, in standard operation,
- loading carbonated mineral stones at the top of each shaft,
- preheating these loaded stones in a preheating zone,
- calcining these preheated stones in a calcination zone with production of a decarbonated calcined material,
- cooling the calcined material with cooling air in a cooling zone, with formation of a heated cooling air, by heat exchange,
- discharging the calcined material from the bottom of the shafts,
- exhausting a gaseous effluent from the kiln,
- each shaft alternately working in a calcining way and in a preheating way, one shaft working in a calcination way during a predetermined time period during which at least another shaft works in a preheating way, and inversely,
- the calcining way comprising :
   said loading step of carbonated mineral stones at the top of a kiln shaft,
   said calcining step by means of an increase of temperature inside said carbonated mineral stones having been preheated, with production of said decarbonated calcined material and release of a gaseous stream which flows in co-current with the calcined material, and
   through said crossover channel, a passage of said gaseous stream toward the at least one shaft working in a preheating way,
- said preheating way comprising :
   said preheating step of the loaded carbonated mineral stones by heat exchange with said gaseous stream coming from the crossover channel, which is ascending and flows in counter-current through the loaded carbonated mineral stones, and
   said exhausting step of said gaseous stream as gaseous effluent at the top of said at least one shaft in preheating way,
   said cooling step comprising a supply of cooling air at the bottom of each of said shafts or only of the shaft working in the calcining way.

In the calcining zone of a classical kiln, it is required in calcining way to inject and burn a fuel into the mass of the stones to be calcined under the preheated stones in order to benefit from the heat of the flue gas that was transferred to the stone in the preheating zone._In preheating way, the stones introduced into the kiln are at ambient temperature and the flue gas drawn outside the kiln is at about 150°C, limiting the energy losses.

According to the invention, standard operation means that the kiln produces the calcined material in a continuous manner. This operation does not concern the phases of starting, stopping or maintenance of the kiln.

According to the invention, carbonated mineral stones particularly mean calcareous stones (limestones), dolomitic stones (dolostones or unburnt dolomites) and/or magnesite stones which are calcined in quicklime, quick dolime and/or magnesia.

The calcination reaction of limestone into quicklime is :

CaCO₃ (solid) + heat ←→ CaO (solid)+ CO₂ (gas)

This reaction is endothermic and reversible. Below 850 to900°C lime and CO₂ can easily recombine. But from a temperature of the order of 900°C the starting stones give off a significative volume of CO₂ during their decarbonation. In order to obtain such a decarbonation, the temperature must consequently be significatively increased in the calcining zone. To-day this increase is mainly obtained by combustion of a fuel, frequently fossil, in presence of an oxidizer such as air. In turn this fuel combustion contributes also to an important release of CO₂. Globally the current calcination methods actively participate in increasing the greenhouse effect.

During the fuel combustion a direct contact of the flame with the preheated carbonated mineral stones also results in possible local overheating in the calcination zone and the possibility that the flue gas or fuel ashes would contaminate the calcined material. A prior careful selection of the fuel is required to maintain a high quality of the calcined material, notably while avoiding high sulphur fuels. Even with selected fossil fuels, the calcined material reactivity can be affected by the fuel ash and the minor pollutants. During the combustion at high temperatures thermal and fuel NOx are also generated due to nitrogen possibly in the fuel but moreover at high contents of nitrogen in the combustion air.

This very common calcination process has also the disadvantage of proposing a combustion of fuel with air and a cooling of the calcined product with air. This results in the release at the top of the kiln of a gaseous effluent having a high level of diatomic nitrogen N₂, and a comparatively low level of CO₂ (concentration by volume of the order of 20% to 27% on dry gas). Due to this high presence of nitrogen in the air, a capture of CO₂ is very difficult and expensive.

The object of the present invention is to remedy the problem of significant CO₂ emissions of PFRK kilns, without substantially modifying their cyclic functioning and by making little or no changes to their structure. Another object is to avoid as much as possible overheat of the calcined material and introduction of impurities in this material. An object of the invention consists also to make easier a capture of CO₂ in the gaseous effluent exiting from the kiln. The main object of the calcination kilns must obviously be maintained, i.e. the production of a calcined material of high quality and purity.

In order to solve these problems, according to the invention a method as above indicated further comprises
recirculating a fraction of the gaseous effluent exhausted from the top of said at least one shaft in preheating way,
outside the kiln, heating said recirculated fraction of gaseous effluent by means of at least one heating device able to heat gas,
injecting the heated recirculated fraction of gaseous effluent into the shaft working in calcining way at a level which is located at the top of the calcination zone, in order to obtain said increase of temperature allowing a calcining of the carbonated mineral stones, and
extracting the heated cooling air from each shaft wherein cooling air has been supplied at a level located below the crossover channel,
the gaseous effluent exiting from the kiln being CO₂ concentrated.

The invention relies mostly on externalizing the energy supply while heating a recirculated gas with a heating device able to heat gas. A gas having a determined temperature entering in such a device exits therefrom at a higher temperature. Such a device may be for example a furnace equipped with at least one torch of plasma, an induction heating device, radiant panels, a microwave oven, a solar heating device, their combination and so on. And the devices able to release a heat gas resulting from a reaction, as for example from a combustion, are not included in the meaning of heating device able to heat a gas according to the invention.

In a variant embodiment, such a device can be a combination of the furnace equipped with at least one torch of plasma, an induction heating device, radiant panels, a microwave oven, a solar heating device with a combustion furnace (indirect combustion heating, oxycombustion, and so on); a switch is to be provided in between. In this way, depending on the availability and price of the energy, a switch can be operated between the furnace of the combination.

The injection system of the kiln of the invention is optimized to get a good heat distribution. So, the quality of the calcined material is widely improved.

No fuel and no air are still necessary for a combustion inside the kiln. Consequently, no or limited additional pollutant will be emitted apart from the minor ones contained in the stones. No ash will be produced resulting to a pure decarbonated material. Due to the absence or the low level of nitrogen in the gas flows, no or little NOx will be produced enabling the plants to comply with more strict regulations. No more direct contact of the stones with a flame is to fear. The appropriate temperature of the heated gas from the heating device is controlled very easily, leading to a high quality of lime. According to the invention the heated recirculated gas is introduced inside the shaft in calcination way at the top of the calcining zone, just below the preheating zone, keeping so all the regenerative features of the kiln.

By recirculating a CO₂ based gas and in absence of combustion air, the system will enrich in CO₂ the gaseous effluent exiting from the kiln, making it easier to capture CO₂.and/or making the CO₂ purification process (CO₂ cleaner and more concentrated) of the kiln flue gas before capture simpler and more energy efficient compared to a standard CO₂ concentration in the flue gas. As in the method according to the invention, an extraction of the heated cooling air from the shafts takes place at a level located below the crossover channel, the gaseous effluent removed from the kiln is formed almost exclusively of the CO₂ based gaseous stream resulting from the decarbonation and of the CO₂ based gas injected in the shaft in calcination way and optionally in the crossover channel. Therefrom it results that the gaseous effluent exhausted from the furnace has a concentrated CO₂ content, typically of at least 80% by volume on dry gas, preferably of at least 90% by volume on dry gas, most preferably at least 95%.

Such a gaseous effluent may be useable or sequestered in favorable conditions and so reduces the contribution to the greenhouse effect of the kiln.

According to an embodiment of the invention, at least one heat exchange between the heated cooling air, which has been extracted outside the kiln, and said recirculated fraction of the gaseous effluent takes place before said step of heating by means of a heating device. Such a heat exchange allows to recover heat from the extracted cooling air before the heating step and the air released in the atmosphere is closer to the ambient temperature.

Advantageously the process of the invention comprises an introduction into the crossover channel of a gaseous mixture of a first part of said recirculated fraction of gaseous effluent which has been heated outside the kiln by means of said device able to heat a gas and a second part of said fraction which has not been heated by said device in order to obtain an adjusted temperature, typically in the range of 900 to 1100°C, higher than the temperature of recarbonation of the calcined mineral stones but lower than said gas temperature allowing a calcining of the carbonated mineral stones which is preferably in the range of 1100 to 1400°C.

Alternatively, the gaseous stream introduced into the crossover channel is the said second part of said fraction which has not been heated by said device heated by a separate heating device to the adjusted temperature lower than said temperature allowing a calcining of the carbonated mineral stones but higher than the temperature of recarbonation of the calcined mineral stones.

According to a preferable embodiment of the invention, a portion of the recirculated fraction of CO₂ based gaseous effluent which has not been heated is injected at the top of each shaft in calcining way.

In a particular case, the method takes place in a 2-shafts kiln.

The present invention also concerns a parallel flow regenerative kiln. Such a kiln comprises at least two shafts interconnected by a crossover channel,
each shaft comprising, in position in service or out of service,
   - at least one entrance opening for loading carbonated mineral stones, at the top of the shaft,
   - at least one exit opening for discharging a decarbonated calcined material, at the bottom of the shaft,
   - a removal duct for exhausting a CO₂ based gaseous effluent from the top of the shaft, and
   - a cooling air supply at the bottom of the shaft for cooling the decarbonated calcined material to be discharged,
the kiln further comprising a reversing system which is arranged to drive said positions in service and out of service of each shaft alternately in calcination working and in preheating working, a shaft being in calcination working during a predetermined time period while at least another shaft is in preheating working and inversely according to the control of said reversing system,
the shaft in calcining working comprising from the top to the bottom successively a preheating zone, a calcination zone and a cooling zone, and said interconnecting crossover channel being located at the bottom of the calcination zone.

According to the invention, each shaft comprises means for injecting a heated gas inside the shaft in calcination working at the top of the calcination zone and means for removing from the kiln the cooling air which has been heated in contact with the calcined material, at a level lower than the crossover channel,
the kiln further comprising an external recirculation circuit which comprises
- a separation body for taking off a fraction of said gaseous effluent from said removal duct,
- a heating device able to heat a gas which is connected with said separation body and arranged for heating said fraction of gaseous effluent, and
- said means for injecting a heated CO₂ based gas inside the shaft in calcination working, which are connected to the heating device and inject said heated fraction of gaseous effluent at a temperature equal or higher than the temperature of calcination of the loaded mineral stones.

As explained above, the PFRK kiln has a cyclic operation, each shaft operating for a predetermined period of time in calcining way, then, after an inversion time, usually between 30 seconds and 2 minutes, in preheating way, and so on. During the inversion time the inversion system synchronously controls all the changes necessary to pass from one way to another, for example by opening means for injecting a gas inside the shaft working in calcination way and closing them when the shaft is switched to the preheating way. The inversion system therefore not only controls numerous flaps and valves, but also the operation of loading and unloading equipment or even that of various suction, pumping or injection elements.

Advantageously, at the bottom of each shaft, at a level lower than the crossover channel, said means for removing heated cooling air from the kiln may comprise a central collector element, which communicates with an external extracting device.

According to some embodiments of the kiln, each shaft has a circular section and is provided with a peripheric channel at the bottom of the calcination zone, said crossover channel interconnecting the peripheric channels of the shafts in order to allow a passage of gas from one shaft to another one. At a level lower than the peripheric channels and the crossover channel, said means for removing heated cooling air from the kiln may comprise an annular collector which communicates with an external extracting device.

According to other kilns, each shaft has a rectangular section, a side of one shaft facing a side of another shaft, the crossover channel interconnecting directly the shafts between said facing sides. At a level below the crossover channel, said means for removing heated cooling air from the kiln comprise on at least some sides of each shaft at least one collector which communicates with an external extracting device.

According to an embodiment of the kiln of the invention, each shaft comprises a top opening for introducing a part of said taken off fraction of CO₂ based gaseous effluent, which has not been heated.

According to another embodiment of the kiln of the invention, at least one heat exchanger supplied with heated cooling air extracted from the kiln is arranged on said external recirculation circuit.

In a preferential embodiment of the invention, the kiln comprises a mixing chamber which is connected to the recirculation circuit downward the heating device in order to collect a first part of said recirculated fraction of CO₂ based gaseous effluent which has been heated and to a separating body which is arranged on the recirculation circuit upwards the heating device and is able to transfer to the mixing chamber a second part of said recirculated fraction of CO₂ based gaseous effluent which has not been heated by said heating device in order to obtain a gaseous mixture having an adjusted temperature lower than a temperature allowing a calcining of the carbonated mineral stones, said mixing chamber being connected to the crossover channel in order to inject therein said gaseous mixture.

Alternatively, the gaseous stream introduced into the crossover channel is heated by a separate heating device to the adjusted temperature lower than said temperature allowing a calcining of the carbonated mineral stones but higher than the temperature of recarbonation of the calcined mineral stones.

As can be seen, the kiln according to the invention has only a few structural modifications made to the exterior of the oven.

In a particular case, the kiln is a 2-shafts kiln.

Other features and details of the method and kiln according to the invention are indicated in the appended claims. Other particularities of the invention will also result from the non-limiting description given below, with reference to the Figure which illustrates an embodiment of a kiln according to the invention.

As can be seen on the Figure, the illustrated PFRK kiln comprises two shafts 1, 2 which have a circular section and are provided with peripheral channels 3 which are interconnected by a crossover channel 4. Conventionally the shaft 1 shown on the left works in calcining way and the shaft 2 shown on the right in preheating way. The shafts are divided in height into three zones, the preheating zone A where the carbonated stones are preheated before calcination, the calcination zone B wherein the decarbonation of the carbonated preheated stones takes place and the cooling zone C wherein the cooling of the decarbonated calcined material takes place.

The carbonated stones are introduced at the top of the shafts by means of an entrance opening 5 which is in open position. By gravity the stones gradually descend in the shaft. When the shaft works in calcining way, at the top of the calcining zone B, thus just under the preheating zone A, means for injecting a gas having a temperature equal or higher than the calcination temperature of the stones are provided in service, for example a gas temperature of 1100 to 1400°C. On the illustrated kiln, these means are represented as holes 6 in the external shell of the shaft which allow injection of a gas from the outside of the shaft at various radial positions inside the shaft, several horizontal layers of injection points being advantageously required to get the right heat distribution. Several others injection systems could also be envisaged as horizontal lances, vertical lances, inner cylinder, beams. So, a decarbonation of the stones takes place with obtention of a decarbonated calcined material which continues to descend in the shaft and of a gaseous stream 7 which flows in co-current with the calcined material.

Via a supply pipe 8 and a feeding opening 9 which is in open position, cooling air is introduced at the bottom of the shafts. Said cooling airflows in counter-current to the calcined material, for cooling it. The cooled calcined material is discharged into an unloading equipment 10 through the exit opening 11 which is in open position.

Said gaseous stream 7 consists in the CO₂ released during the decarbonation and the heated CO₂ based gas injected inside the shaft. Via the peripheral channel 3, this gaseous stream passes through the crossover channel 4 and thereafter inside the shaft 2 working in preheating way.

When a shaft is working in preheating way, here the shaft 2, the means for injecting a CO₂ based gas 6 are out of service. On the other hand, the feeding opening 9 for the cooling air and the exit opening 11 for the calcined material remain in the open position. In this shaft 2 the gas stream which comes from the crossover channel 4 progresses to the top of the shaft in counter-current of the stones which are so preheated. Via an outlet opening 12 which is here in open position, gaseous effluents are exhausted from the kiln through a removal duct 13 and a stack 14. In the shaft 1 working in calcination way, the outlet opening 12 of this removal duct 13 is closed.

The kiln also includes a reversing system 15 shown schematically. This system synchronously controls the operation of the shafts, during the inversion time, directly or remotely. The system is arranged to drive said positions in service and out of service of each shaft alternately in calcination working and in preheating working.

Outside of the kiln, on the removal duct 13, a separation body 16 has been provided, which is able of taking off a fraction of the gaseous effluent exhausted from the kiln and of introducing it into a recirculation circuit 17. In this circuit the fraction of gaseous effluent is advantageously treated in a treatment unit 18, wherein it can for example be filtered and/or dried. The recirculation circuit 17 comprises also an external heating device 19 which is able to heat gas. This heating device may be driven by the reversing system 15 for supplying a CO₂ based gas having the temperature appropriate for being injected through the holes 6 of the shaft working in calcination way and for obtaining a thermal decomposition of the preheated stones.

A portion of said fraction of gaseous effluent is taken off from the recirculation circuit 17 upstream of the heating furnace 19. This taken off gas has a temperature close to the ambient temperature and is advantageously introduced in the shaft 1 in calcining way at its top opening 20, as in the illustrated kiln. This opening is closed in the shaft 2 working in preheating way. A cold gas needs to be injected at the top of the shaft 1 to keep the benefit from the regeneration, with a slightly higher pressure.

In the illustrated kiln, the heated cooling air is drawn through a central collector element 21 which communicates with an external extracting device 22 for removing from the kiln, at a level lower than the crossover channel 4, the cooling air which has been heated in contact with the decarbonated calcined material. For the same purpose each circular shaft may also be equipped with an annular collector 23 which communicates also with said extracting device 22.

At least one heat exchanger supplied with heated cooling air extracted from the kiln is advantageously arranged on said external recirculation circuit 17. In the illustrated kiln, the heated cooling air drawn by the extracting device 22 is supplied to a heat exchanger 24 wherein a heat exchange takes place with the cold gas exiting from the treatment unit 18. Air at a temperature close to the ambient temperature is so released in the atmosphere by the outlet 25 and there is an energy recovering upstream of the heating device 19.

The illustrated kiln comprises also means for advantageously injecting a heated gas 26 into the crossover channel 4. This gas is supplied from a mixing chamber 27 which is connected to the recirculation circuit 17 downward the heating device 19 in order to collect a first part of said recirculated fraction of gaseous effluent which has been heated and to a separating body 28 which is arranged on the recirculation circuit 17 upwards the heating device 19 and is able to transfer to the mixing chamber 27 a second part of said recirculated fraction of gaseous effluent which has not been heated by said heating device. So, a gaseous mixture having an adjusted temperature in the range of 900 to 1100°C, higher than the temperature of recarbonation of the calcined mineral stones but lower than a temperature allowing a calcining of the carbonated mineral stones being advantageously in the range of 1100 to 1500°C, is obtained and may be injected by the connection 26 into the crossover channel 4 for compensating the extraction of the heated cooling air from the kiln.

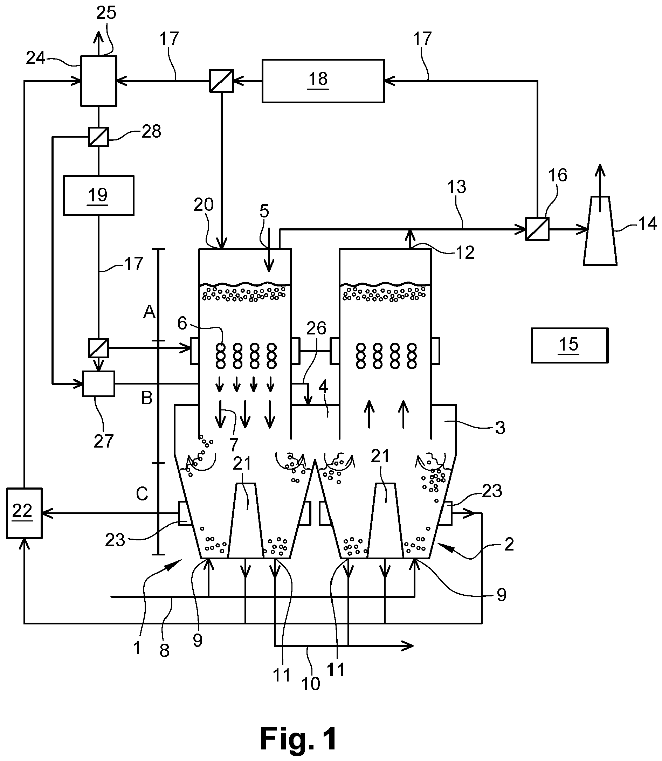

In another embodiment, the gaseous mixture having an adjusted temperature in the range of 900 to 1100°C to be injected in the crossover channel 4 for compensating the extraction of the heated cooling air from the kiln is generated by a separate heating device, heating to the range of 900 to 1100°C the second part of said recirculated fraction of CO₂ based gaseous effluent which has not been heated by said heating device 19, to directly be injected by the connection 26 into the crossover channel. This embodiment is not represented in figure 1.

In this illustrated kiln, the gaseous stream entering the shaft 2 consists almost only in the CO₂ released during the decarbonation in shaft 1, the heated CO₂ based gas injected inside the shaft 1 at the top of the calcining zone B by the means 6 and the heated CO₂ based gas injected inside the crossover channel by the means 26. This gaseous stream is no more diluted by air. Effectively there is no more need of air for any combustion and the cooling air is extracted from the kiln. Consequently, the CO₂ content of the gaseous effluent exiting from the kiln is highly concentrated.

Obviously, the present invention is not limited to the disclosed embodiment and several modifications may be provided without being outside the scope of the appended claims.

## Claims

1. Method for calcining carbonated mineral stones in a parallel flow regenerative kiln having at least two shafts interconnected by a crossover channel, comprising, in standard operation,
- loading carbonated mineral stones at the top of each shaft,
- preheating these loaded stones in a preheating zone,
- calcining these preheated stones in a calcination zone with production of a decarbonated calcined material,
- cooling the calcined material with cooling air in a cooling zone, with formation of heated cooling air by heat exchange,
- discharging the calcined material from the bottom of the shafts,
- exhausting a gaseous effluent from the kiln,
- each shaft alternately working in a calcining way and in a preheating way, one shaft working in a calcination way during a predetermined time period during which at least another shaft works in a preheating way, and inversely,
- the calcining way comprising :
said loading step of carbonated mineral stones at the top of a kiln shaft,
said calcining step by means of an increase of temperature inside said carbonated mineral stones having been preheated, with production of said decarbonated calcined material and release of a gaseous stream which flows in co-current with the calcined material, and
through said crossover channel, a passage of said gaseous stream toward the at least one shaft working in a preheating way,
- said preheating way comprising :
said preheating step of the loaded carbonated mineral stones by heat exchange with said gaseous stream coming from the crossover channel, which is ascending and flows in counter-current through the loaded carbonated mineral stones, and
said exhausting step of said gaseous stream as gaseous effluent at the top of said at least one shaft in preheating way,
said cooling step comprising a supply of cooling air at the bottom of each of said shafts or only of the shaft working in the calcining way,
**characterized in that** said method further comprises
recirculating a fraction of the gaseous effluent exhausted from the top of said at least one shaft in preheating way,
outside the kiln, heating said recirculated fraction of gaseous effluent by means of at least one device able to heat gas,
injecting the heated fraction of recirculated gaseous effluent into the shaft working in calcining way at a level which is located at the top of the calcination zone, in order to obtain said increase of temperature allowing a calcining of the carbonated mineral stones, and
extracting the heated cooling air from each shaft wherein cooling air has been supplied at a level located below the crossover channel, the gaseous effluent exiting from the kiln being CO₂ concentrated.

2. Method according to claim 1, further comprising at least one heat exchange between the heated cooling air, which has been extracted outside the kiln, and said recirculated fraction of gaseous effluent before said step of heating by means of said device able to heat a gas.

3. Method according to claim 1 or 2, further comprising an introduction into the crossover channel of a gaseous mixture of a first part of said recirculated fraction of gaseous effluent which has been heated outside the kiln by means of said device able to heat a gas and a second part of said fraction which has not been heated by said device in order to obtain an adjusted temperature lower than said temperature allowing a calcining of the carbonated mineral stones and higher of its recarbonation temperature.

4. Method according to anyone of claims 1 to 3, wherein a portion of the recirculated fraction of gaseous effluent which has not been heated is injected at the top of each shaft in calcining way.

5. Parallel flow regenerative kiln, comprising at least two shafts (1,2) interconnected by a crossover channel (4),
each shaft comprising, in position in service or out of service,
- at least one entrance opening (5) for loading carbonated mineral stones, at the top of the shaft,
- at least one exit opening (11) for discharging a decarbonated calcined material, at the bottom of the shaft,
- a removal duct (13) for exhausting a CO₂ based gaseous effluent from the top of the shaft, and
- a cooling air supply (8) at the bottom of the shaft for cooling the decarbonated calcined material to be discharged,
the kiln further comprising a reversing system (15) which is arranged to drive said positions in service and out of service of each shaft alternately in calcination working and in preheating working, a shaft (1) being in calcination working during a predetermined time period while at least another shaft (2) is in preheating working and inversely according to the control of said reversing system (15),
the shaft (1) in calcining working comprising from the top to the bottom successively a preheating zone (A), a calcination zone (B) and a cooling zone (C), and said interconnecting crossover channel (4) being located at the bottom of the calcination zone (B),
**characterized in that** each shaft comprises means for injecting a heated gas (6) inside the shaft (1) in calcination working at the top of the calcination zone (B) and means for removing (21, 23) from the kiln the cooling air which has been heated in contact with the calcined material, at a level lower than the crossover channel (4),
and **in that** the kiln further comprises an external recirculation circuit (17) which comprises
- a separation body (16) for taking off a fraction of said gaseous effluent from said removal duct (13),
- a heating device (19) able to heat a gas which is connected with said separation body (16) and arranged for heating said fraction of gaseous effluent, and
- said means for injecting a heated gas (6) inside the shaft (1) in calcination working, which are connected to the heating device (19) and inject said heated fraction of gaseous effluent at a temperature equal or higher than the temperature of calcination of the loaded mineral stones.

6. Parallel flow regenerative kiln according to claim 5, **characterized in that**, at the bottom of each shaft, at a level lower than the crossover channel (4), said means for removing heated cooling air from the kiln comprise a central collector element (21) which communicates with an external extracting device (22).

7. Parallel flow regenerative kiln according to claim 5 or 6, **characterized in that** each shaft has a circular section and is provided with a peripheral channel (3) at the bottom of the calcination zone (B), said crossover channel (4) interconnecting the peripheral channels (3) of the shafts in order to allow a passage of gas from one shaft to another one, and **in that**, at a level lower than the peripheral channels and the crossover channel, said means for removing heated cooling air from the kiln comprise an annular collector (23) which communicates with an external extracting device (22).

8. Parallel flow regenerative kiln according to anyone of claims 5 or 6, **characterized in that** each shaft has a rectangular section, a side of one shaft facing a side of another shaft, the crossover channel interconnecting directly the shafts between said facing sides and **in that**, at a level below the crossover channel, said means for removing heated cooling air from the kiln comprise on at least some sides of each shaft at least one collector which communicates with an external extracting device.

9. Parallel flow regenerative kiln according to anyone of claims 5 to 8, **characterized in that** the heating device (19) is a furnace equipped with at least one torch of plasma, an induction heating device, radiant panels, a microwave oven, or a solar heating device.

10. Parallel flow regenerative kiln according to anyone of claims 5 to 9, wherein each shaft comprises a top opening (20) for introducing a part of said taken off fraction of CO₂ based gaseous effluent, which has not been heated.

11. Parallel flow regenerative kiln according to anyone of claims 5 to 10, **characterized in that** at least one heat exchanger (24) supplied with heated cooling air extracted from the kiln is arranged on said external recirculation circuit (17).

12. Parallel flow regenerative kiln according to anyone of claims 5 to 11 comprising a mixing chamber (27) which is connected to the recirculation circuit (17) downward the heating device in order to collect a first part of said recirculated fraction of gaseous effluent which has been heated and to a separating body (28) which is arranged on the recirculation circuit (17) upwards the heating device (19) and is able to transfer to the mixing chamber a second part of said recirculated fraction of gaseous effluent which has not been heated by said heating device in order to obtain a gaseous mixture having an adjusted temperature lower than a temperature allowing a calcining of the carbonated mineral stones, said mixing chamber being connected (26) to the crossover channel in order to inject therein said gaseous mixture.
